# EUROPEAN PATENT APPLICATION

(11) **EP 2 584 228 A1**
(43) Date of publication of application: **24.04.2013**
(21) Application number: 11795662.3
(22) Date of filing: 10.06.2011
(51) Int. Cl.: F16H 63/10, F16D 41/08, F16H 3/08, F16H 61/28

(54) **MOTOR DRIVE APPARATUS FOR VEHICLE, AND AUTOMOBILE**

(30) Priority: 17.06.2010 JP 2010137918
(71) Applicant: NTN Corporation, Osaka-shi, Osaka 550-0003 (JP)
(72) Inventor: YAMAMOTO Ken, Iwata-shi Shizuoka 438-0037 (JP); ITAKURA Yoshinori, Iwata-shi Shizuoka 438-0037 (JP); ISOBE Fumihiro, Iwata-shi Shizuoka 438-0037 (JP)
(74) Representative: Grünecker, Kinkeldey, Stockmair & Schwanhäusser
(86) International application number: PCT/JP2011/063386
(87) International publication number: WO 2011/158755

(57) **Abstract**

A motor drive assembly for vehicles is provided which includes a plurality of two-way clutches mounted in a transmission and capable of preventing two or more of the two-way clutches from becoming engaged simultaneously. The assembly includes first and second reduction gear trains (23 and 24) which are provided between an input shaft (21) rotated by an electric motor (10) and an output shaft (22). First and second two-way clutches (30A and 30B) are mounted between a first output gear (23b) of the first reduction gear train (23) and the output shaft (22) and between a second output gear (24b) of the second reduction gear train (24) and the output gear (22), respectively. The assembly further includes first- and second-speed friction plates (52a and 52b) which are rotationally fixed to retainers (36) of the respective two-way clutches (30A and 30B). A control ring (51) is disposed between the friction plates (52a and 52b). When the control ring (51) is shifted axially such that first-speed friction plate (52a) is axially moved, the first two-way clutch (30A) engages. When the control ring (51) is shifted such that the second-speed friction plate (52b) is axially moved, the second two-way clutch (30B) engages. While the first- and second-speed friction plates (52a and 52b) are in their respective neutral position, they are rotationally fixed in position by first and second rotation-stop means (57 and 61). This prevents the first and second two-way clutches (30A and 30B) from becoming engaged simultaneously.

## Description

### TECHNICAL FIELD

This invention relates to a motor drive assembly for vehicles including an electric motor as a driving source, and adapted to transmit the output of the motor to vehicle wheels after reducing its speed, and a vehicle carrying this motor drive assembly.

### BACKGROUND ART

One known motor drive assembly used to drive an electric vehicle or a hybrid vehicle includes an electric motor, a transmission for changing the rotational speed of the rotation of the output shaft of the electric motor in different ratios, and a differential for distributing the power from the transmission to right and left axles.

Such a motor drive assembly allows the use of the electric motor in the most efficient revolving speed range and torque range both while the vehicle is being driven and during regenerative braking by changing the gear ratio according to the travel conditions.

By selecting the most suitable gear ratio, it is possible to minimize the rotational speeds of the rotary members of the transmission while the vehicle is traveling at high speed, which results in reduced power loss. This improves energy efficiency of the vehicle.

Patent documents 1 to 4 disclose motor drive assemblies for vehicles which use a normally meshing transmission including parallel shafts. The transmission disclosed in Patent document 1 includes an input shaft, a countershaft extending parallel to the input shaft, a plurality of normally meshing pairs of gears provided between the input shaft and the countershaft, each pair providing a gear ratio that is different from the gear ratios of the other pairs. A two-way clutch is mounted in one of each pair of gears. The two-way clutches are controlled by selectively activating either one of a pair of solenoids to drive any selected one of the gear pairs, while keeping the other gear pairs idling, thereby switching over the gear ratio.

The transmission disclosed in Patent document 2 includes an input shaft, an output shaft, and a plurality of power transmission mechanisms provided between the input and output gears and each providing a gear ratio different from the gear ratios of the other power transmission mechanisms. Two-way clutches are mounted between the respective power transmission mechanisms and one of the input and output shafts. Control means is used to change the direction in which torque is transmitted through each two-way clutch, thereby changing the gear ratio.

The transmission disclosed in Patent document 3 includes a main support shaft, a counter support shaft, and a plurality of gear trains provided between the main support shaft and the counter support shaft and providing different gear ratios. Each gear train includes a roller synchronization mechanism capable of locking the corresponding gear train to the main support shaft and the counter support shaft. The gear ratio is changed by driving the roller synchronization mechanisms with a shift actuator connected to an electric control unit.

The transmission disclosed in Patent document 4 includes parallel shafts, and a plurality of gears provided on one and the other parallel shafts and providing different gear ratios. Two-way clutches are mounted in the gears mounted on one of the parallel shafts. The gear ratio is changed by selectively engaging and disengaging the respective two-way clutches.

### PRIOR ART DOCUMENTS

### PATENT DOCUMENTS

Patent document 1: JP Patent Publication 2007-298145A
Patent document 2: JP Patent Publication 2002-48198A
Patent document 3: JP Patent Publication 6-1164A
Patent document 4: JP Patent Publication 2004-211834A

### SUMMARY OF THE INVENTION

### OBJECT OF THE INVENTION

In the motor drive assembly disclosed in any of Patent documents 1 to 4, there is the possibility that a plurality of clutches may engage simultaneously due e.g. to a glitch of the control program. If a plurality of the clutches engage simultaneously, power circulation occurs, which could damage to component parts of the assembly.

An object of the present invention is to provide a motor drive assembly including a plurality of two-way clutches mounted in the transmission and having means for preventing two or more of the two-way clutches from becoming engaged simultaneously, and to provide an electric vehicle and a hybrid vehicle.

### MEANS TO SOLVE THE PROBLEMS

In order to achieve this object, the present invention provides a motor drive assembly for vehicles comprising an electric motor, a normally meshing transmission including first and second parallel support shafts and a plurality of gear trains providing different gear ratios by selectively transmitting the rotation of the electric motor through any selected one of the gear trains, a differential for distributing the power from the transmission to right and left wheels, wherein each of the gear trains comprises first and second gears meshing with each other, the first gears being rotatably supported by the first support shaft, two-way clutches which are equal in number to the number of the gear trains and disposed between the first gears of the respective gear trains and the first support shaft, and a gear ratio switch-over mechanism for selectively engaging one of an axially opposed adjacent pair of the two-way clutches, wherein the two-way clutches are mechanical type two-way clutches each comprising engaging elements and a retainer retaining the engaging elements, and configured to selectively lock the first gear to the first support shaft by controlling the rotation of the retainer, the gear ratio switch-over mechanism comprising an axially opposed first and second friction plates rotationally fixed to the retainers of the axially opposed pair of the two-way clutches, respectively, a control ring mounted between the first and second friction plates and movable axially toward the first and second friction plates, respectively, and configured to push and move the first and second friction plates when the control ring is moved toward the first and second friction plates, respectively, thereby controlling the rotation of the retainers corresponding to the respective first and second friction plates, and a shift mechanism for axially moving the control ring, wherein the first support shaft is formed with an annular projection on an outer periphery of the first support shaft, and wherein the gear ratio switch-over mechanism further includes a first rotation-stop means for rotationally fixing the respective first and second friction plates to the annular projection when the respective first and second friction plates are in their neutral positions, and a second rotation-stop means for rotationally fixing the control ring to the annular projection when the control ring is in its neutral position, and for preventing axial movement of the control ring when the control ring rotates about the first support shaft while the control ring is not rotationally fixed to the annular projection.

In this arrangement, when the control ring is moved in one axial direction by the shift mechanism of the gear ratio switch-over mechanism, one of the friction plates which is in front of the control ring with respect to the one axial direction is pushed by the control ring and moved in the one axial direction to the control position where the rotation of the retainer of one two-way clutch which is rotationally fixed to the one of the friction plates is controlled by this friction plate. The one two-way clutch thus engages, locking the first gear to the first support shaft. As a result, the rotation of the electric motor is transmitted to the differential after its speed has been changed by the engaged gear train. The right and left wheels are thus driven by the electric motor.

When one of the two opposed two-way clutches engages by controlling the rotation of its retainer, since the control ring rotates relative to the first support shaft because it is not rotationally fixed in position in this state, the second rotation-stop means prevents the control ring from moving in the axial direction of the first support shaft to its original position. This ensures that the one two-way clutch remains engaged, while the other of the opposed pair of two-way clutches never engages simultaneously because its retainer is kept in its neutral position since it is rotationally fixed to the friction plate which is rotationally fixed in position by the first rotation-stop means. This prevents power circulation.

When this two-way clutch is disengaged by the gear ratio switch-over mechanism, transmission of torque from the electric motor to the differential is shut off. In this state, since the first support shaft is rotatable relative to the first gear, torque from the wheels causes only the first support shaft to rotate and the first gear does not rotate.

The electric vehicle according to this invention carries the above-described motor drive assembly, which is configured to drive at least a pair of front right and front left wheels which are provided at the front portion of the vehicle or a pair of rear right and rear left wheels provided at the rear portion of the vehicle.

The hybrid vehicle according to the present invention carries an engine configured to drive the front wheels or the rear wheels, and the above-described motor drive assembly, which is configured to drive the other wheels.

While the above hydraulic vehicle, which carries the above motor drive assembly, is being driven by the engine alone, the two-way clutches are all kept disengaged to prevent the transmission and the motor from being rotated by the wheels which are configured to be driven by the motor, thereby minimizing energy loss.

The motor drive assembly according to the present invention may be configured such that the two-way clutches each further comprise an inner ring mounted between the first gear and the first support shaft and rotationally fixed to the first support shaft, wherein a cylindrical surface is formed on one of an outer periphery of the inner ring and an inner periphery of the first gear, and cam surfaces are formed on the other to define wedge-shaped spaces between the respective cam surfaces and the cylindrical surfaces, each of the wedge-shaped spaces narrowing toward respective circumferential ends thereof, and wherein the engaging elements are rollers received between the respective cam surfaces and the cylindrical surface, and retained in position by the retainer, the retainer being mounted between the first gear and the inner ring, and a switch spring mounted between one of the first gear and the inner ring that is formed with the cam surfaces and the retainer and elastically retaining the retainer in a neutral position where the rollers are out of engagement with the cylindrical surface and the cam surfaces.

The first rotation-stop means may comprise rotation-stop grooves formed in the annular projection, and rotation-stop protrusions formed on the first and second friction plates and configured to be engaged in the rotation-stop grooves. The second rotation-stop means may comprise second rotation-stop grooves formed in the annular projection, and second rotation-stop protrusions formed on an inner periphery of the control ring and configured to be engaged in the second rotation-stop grooves.

The shift mechanism may comprise a sleeve rotatably supported by an outer periphery of the control ring, a shift rod extending parallel to the first and second support shafts and movable in an axial direction of the shift rod, an actuator for moving the shift rod in the axial direction, and a shift fork supported by the shift rod for moving the control ring together with the sleeve to the position corresponding to the axial movement of the shift rod when the shift rod is moved axially.

When the shift rod of this shift mechanism is moved in either axial direction by the actuator, the sleeve and the control ring are moved toward the member formed with the cylindrical surface until the friction plate is pressed against, and thus brought into frictional engagement with, the side of the member formed with the cylindrical surface by the control ring. Due to the frictional engagement, the retainer is coupled to the member formed with the cylindrical surface, which causes the retainer to rotate relative to the member formed with the cam surfaces until the rollers engage the cylindrical surface and the cam surfaces, thus instantly engaging the two-way clutch. The rotation of the electric motor is thus transmitted to the differential at a reduced speed ratio, and from the differential to the wheels.

A rolling bearing is preferably mounted between the opposed surfaces of the control ring and the sleeve to prevent the rotation of the control ring from being transmitted to the sleeve, and thus to smoothly change gears.

The actuator of the shift mechanism, which axially moves the shift rod, may be a motor, or a cylinder or a solenoid connected to the shift rod.

If the actuator is a motor, the rotation of the motor is converted to linear motion of the shift rod by means of a motion converter mechanism. The motion converter mechanism may include a nut member supported by the shift rod so as to be rotatable about the shift rod, and rotated by the motor as the actuator, wherein the nut member is formed with an internal thread on its inner periphery, and the shift rod is formed with an external thread on its outer periphery which is in threaded engagement with the internal thread of the nut member.

### ADVANTAGES OF THE INVENTION

According to the present invention, when the control ring is moved in either axial direction by the shift mechanism, the two-way clutch toward which the control ring is moved engages, and with this two-way clutch engaged, the control ring is prevented from axially returning to the original position by the second rotation-stop means. This keeps the engaged two-way clutch engaged, while the first rotation-stop means keeps the other two-way clutch in the neutral position. Thus, it is possible to reliably prevent two or more two-way clutches from engaging simultaneously. This prevents power circulation, which could damage component parts of the assembly.

### BRIEF DESCRIPTION OF THE DRAWINGS

Fig. 1(A) is a schematic view of an electric vehicle which uses a motor drive assembly for vehicles according to the present invention; and Fig. 1(B) is a schematic view of a hybrid vehicle using this motor drive assembly for vehicles.
Fig. 2 is a sectional view of this motor drive assembly for vehicles.
Fig. 3 is an enlarged sectional view of a portion of a transmission of Fig. 2.
Fig. 4 is a sectional view taken along line IV-IV of Fig. 3.
Fig. 5 is a sectional view taken along line V-V of Fig. 3.
Fig. 6 is a sectional view taken along line VI-VI of Fig. 3.
Fig. 7 is a sectional view of a gear ratio switch-over mechanism.
Fig. 8(A) is an enlarged sectional view of a portion of Fig. 3; and Fig. 8(B) is a sectional view of friction plates, showing their rotation-stop portions.
Fig. 9(A) is a sectional view showing a state during deceleration at first speed ratio; Fig. 9(B)-(I) is a sectional view showing a state during acceleration; and Fig. 9(B)-(II) is a sectional view showing a state during deceleration.
Fig. 10(A) is a sectional view showing a state during deceleration at second speed ratio; Fig. 10(B)-(I) is a sectional view showing a state during acceleration; and Fig. 10(B)-(II) is a sectional view showing a state during deceleration.
Fig. 11 is an exploded perspective view showing a spacer, friction plates and a control ring, of the gear ratio switch-over mechanism.

### BEST MODE FOR EMBODYING THE INVENTION

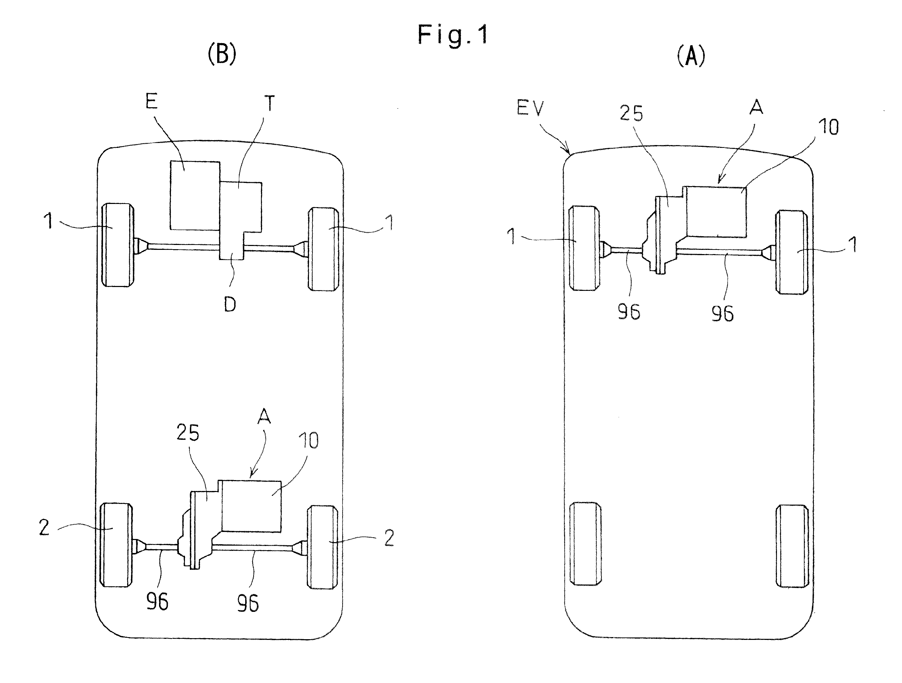

The embodiment of the present invention is now described with reference to the drawings. Fig. 1(A) shows an electric vehicle EV including a motor drive assembly A according to the present invention for driving the pair of right and left front wheels 1. Fig. 1(B) shows a hybrid vehicle HV including an engine E for driving the pair of right and left front wheels 1 as the main drive wheels, and the motor drive assembly A, which is used to drive the pair of right and left rear wheels 2 as auxiliary drive wheels. The revolution of the engine E is transmitted to the front wheels 1 through a transmission T and a differential D.

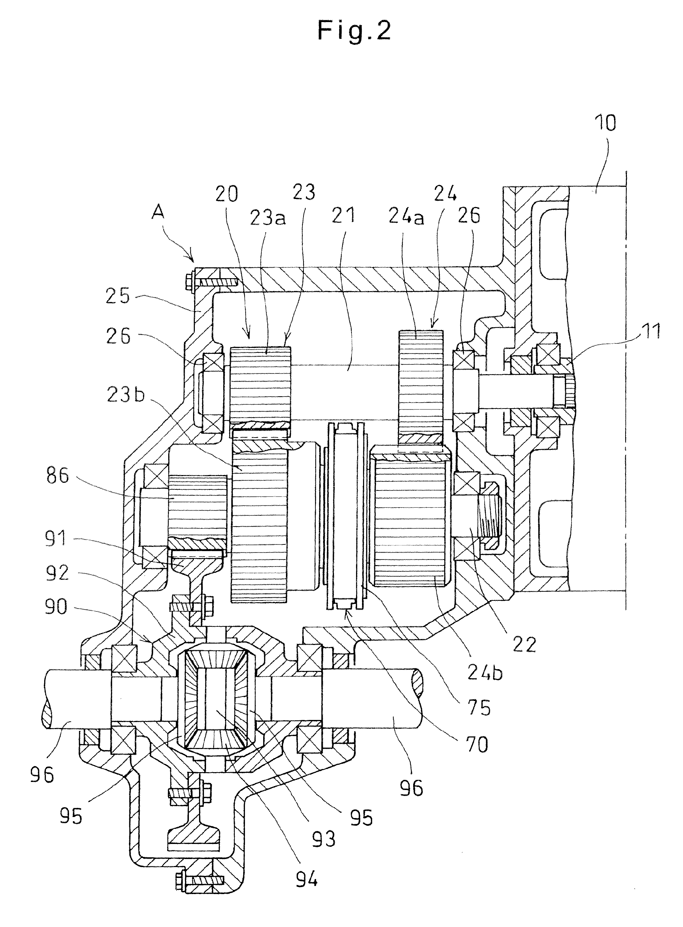

As shown in Fig. 2, the motor drive assembly A includes an electric motor 10 having an output shaft 11, a transmission 20 for changing the rotational speed of the output shaft 11, and a differential 90 for distributing the power from the transmission 20 to the front wheels 1 of the electric vehicle EV shown in Fig. 1(A), or to the rear wheels 2 of the hybrid vehicle HV shown in Fig. 1(B).

The transmission 20 is a normally meshing speed reducer including a first reduction gear train 23 and a second reduction gear train 24 disposed between an input shaft 21 and an output shaft 22.

The input shaft 21 and the output shaft 22 are each rotatably supported by an opposed pair of bearings 26 mounted in a housing 25 to extend parallel to each other. The input shaft 21 is connected to the output shaft 11 of the electric motor 10.

The first reduction gear train 23 includes a first input gear 23a mounted on the input shaft 21, and a first output gear 23b meshing with the first input gear 23a and rotatable about the output shaft 22.

The second reduction gear train 24 includes a second input gear 24a mounted on the input shaft 21, and a second output gear 24b meshing with the second input gear 24a and rotatable about the output shaft 22. The second reduction gear train 24 has a smaller reduction ratio than the first reduction gear train 23.

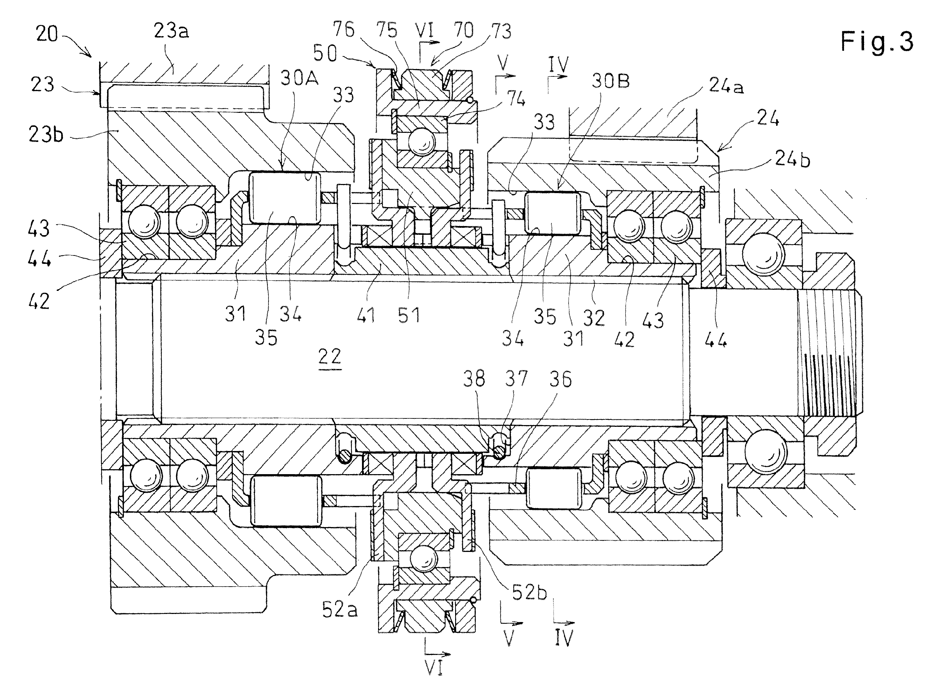

As shown in Fig. 3, a first two-way clutch 30A is mounted between the first output gear 23b and the output shaft 22 for selectively locking together and unlocking the first output gear 23b and the output shaft 22. A second two-way clutch 30B is mounted between the second output gear 24b and the output shaft 22 for selectively locking together and unlocking the second output gear 24b and the output shaft 22.

The first two-way clutch 30A and the second two-way clutch 30 are of an identical structure and arranged so as be bilaterally symmetrical to each other. Thus, description is now made only of the second two-way clutch 30B. Description of the first two-way clutch 30A is omitted with its elements denoted by the same numerals used for the corresponding elements of the second two-way clutch 30B.

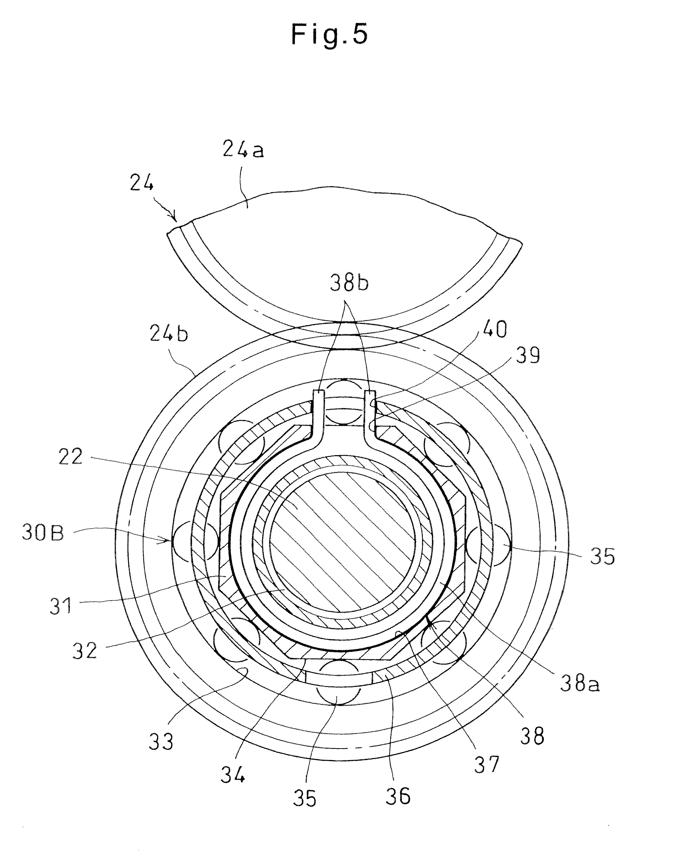

As shown in Figs. 3 to 5, the second two-way clutch 30B includes an inner ring 31 fitted on the output shaft 22 and rotationally fixed to the output shaft 22 by means of splines 32. The inner ring 31 has on its radially outer periphery a plurality of circumferentially equidistantly spaced apart flat cam surface 34 which each define a wedge-shaped space which narrows toward its circumferential ends, in cooperation with a radially inner cylindrical surface 33 of the first output gear 23b. A roller 35 as an engaging element is mounted between each cam surface 34 and the cylindrical surface 33. The clutch 30B further includes a retainer 36 mounted between first output gear 23b and the inner ring 31 and retaining the rollers 35.

The inner ring 31 has a recess 37 formed in one axial end surface thereof. A switch spring 38 has its circular portion 38a received in the recess 37. The switch spring 38 has pressing pieces 38b extending radially outwardly from the respective ends of the circular portion 38a. The pressing pieces 38b extend through a cutout 39 formed in the outer peripheral wall of the recess 37 and a cutout 40 formed in the corresponding end surface of the retainer 36 to press the respective circumferentially opposed end surfaces of the cutout 39 and the respective circumferentially opposed end surfaces of the cutout 40 in directions circumferentially away from each other, thereby elastically keeping the retainer 36 in a neutral position where the rollers 35 are out of engagement with the cylindrical surface 33 and the cam surfaces 34.

As shown in Fig. 3, the inner ring 31 mounted inside of the first output gear 23b and the inner ring 31 mounted inside of the second output gear 24b are sandwiched between a spacer 41 mounted between the two inner rings 31 and one of two stopper rings 44 fitted on the output shaft 22 and between the spacer 41 and the other stopper ring 44, respectively. Thus, the inner rings 31 are both axially immovable. The spacer 41 is fixed to both inner rings 31 so that the spacer 41 rotates in unison with the inner rings 31.

Each of these two inner rings 31 is formed with a cylindrical bearing fitting surface 42 at its axially outer end portion, which faces the stopper ring 44. Bearings 43 are fitted on the bearing fitting surfaces 42 of the respective inner rings 31 to rotatably support the first output gear 23b and the second output gear 24b relative to the respective inner rings 31.

The first two-way clutch 30A and the second two-way clutch 30B are selectively engaged and disengaged by a gear ratio switch-over mechanism 50 shown in Figs. 3 and 6-8.

The gear ratio switch-over mechanism 50 includes a control ring 51 axially movably provided around the spacer 41, a first-speed friction plate 52a fitted to one end of the control ring 51, and a second-speed friction plate 52b fitted to the other end of the control ring 51. The first-speed friction plate 52a is rotationally fixed to the retainer 36 of the first two-way clutch 30A. The second-speed friction plate 52b is rotationally fixed to the retainer 36 of the second two-way clutch 30B. When the control ring 51 is moved toward the first output gear 23b by a shift mechanism 70 until the first-speed friction plate 52a is pressed against the side of the first output gear 23b, the retainer 36 is coupled to the first output gear 23b due to friction between the first-speed friction plate 52a and the first output gear 23b. This causes the retainer 36 to rotate relative to the inner ring 31 until the rollers 35 engage the cylindrical surface 33 and the respective cam surfaces 34.

When the control ring 51 is moved toward the second output gear 24b by a shift mechanism 70 until the second-speed friction plate 52b is pressed against the side of the second output gear 24b, the retainer 36 is coupled to the second output gear 24b due to friction between the second-speed friction plate 52b and the second output gear 24b. This causes the retainer 36 to rotate relative to the inner ring 31 until the rollers 35 engage the cylindrical surface 33 and the respective cam surfaces 34.

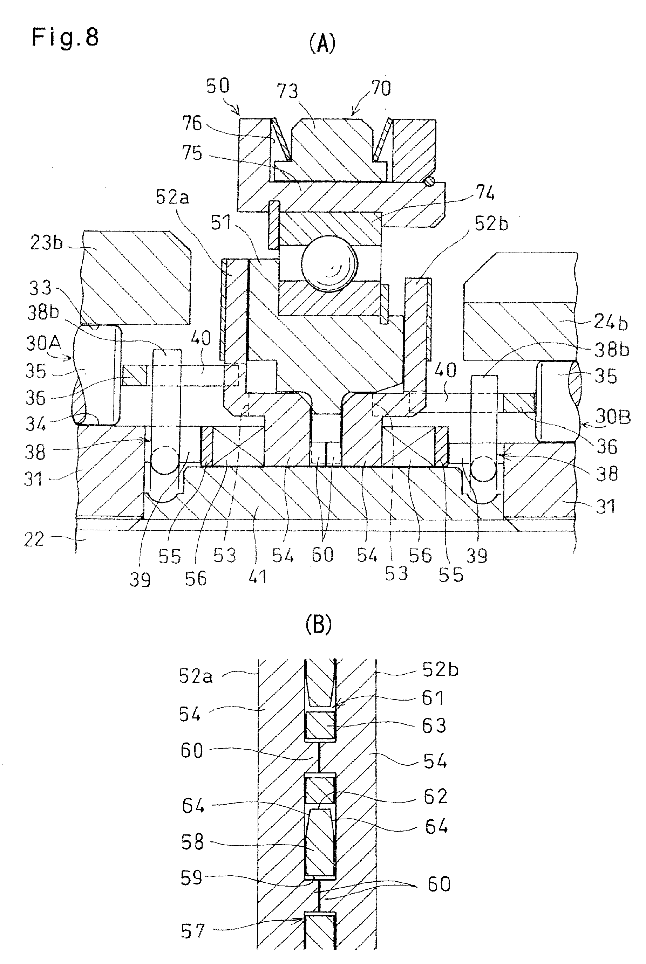

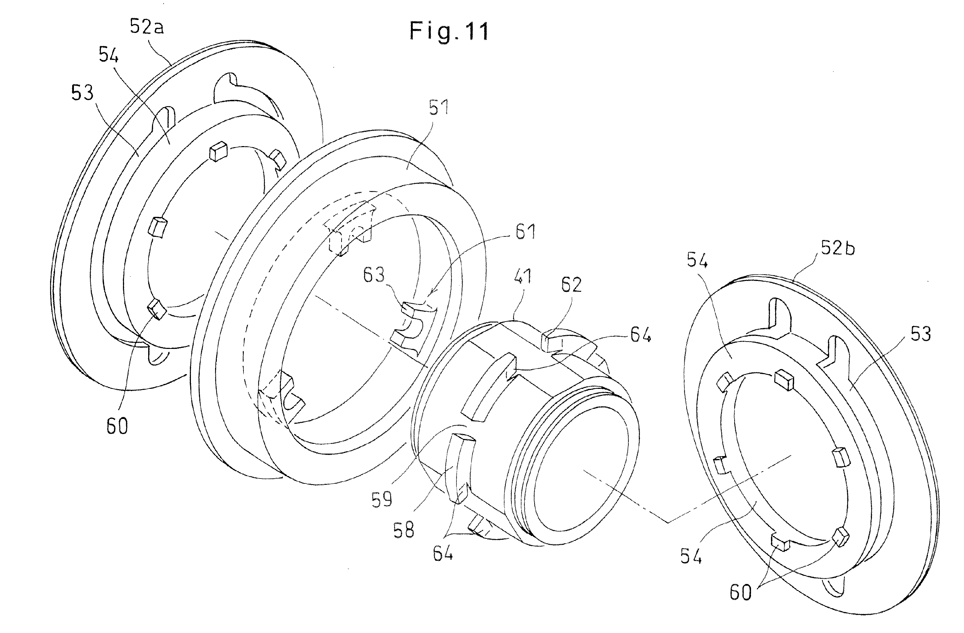

As shown in Figs. 8 and 11, the first-speed friction plate 52a and the second-speed friction plate 52b are each formed with an arcuate groove 53 in which the end of the retainer 36 where the cutout 40 is formed is engageable. The first-speed friction plate 52a and the second-speed friction plate 52b are rotationally fixed to the respective retainers 36 due to engagement of the ends of the retainers 36 in the arcuate grooves 53 of the first-speed friction plate 52a and the second-speed friction plate 52b, respectively.

Each of the first-speed friction plate 52a and the second-speed friction plate 52b has at its radially inner portion a boss 54 protruding toward the other of the friction plates 52a and 52b. A washer 55 and an elastic member 56 are mounted between the boss 54 of each friction plate 52a, 52b and the corresponding inner ring 31. The elastic member 56 biases the corresponding one of the first-speed friction plate 52a and the second-speed friction plate 52b away from the corresponding inner ring 31, i.e. toward a neutral position where the friction plate 52a, 52b is out of engagement.

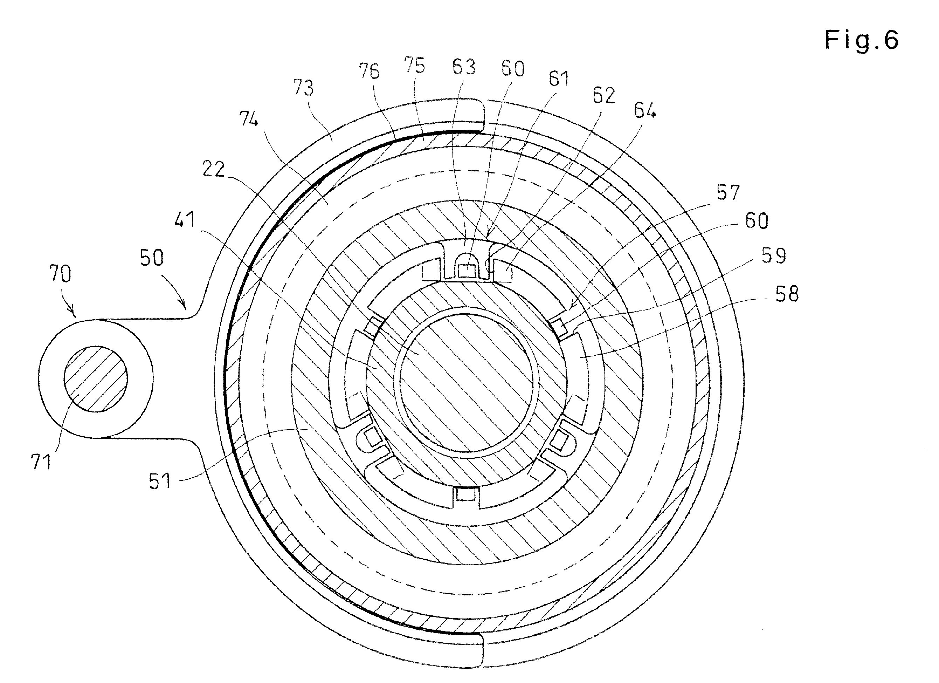

As shown in Figs. 6 and 8, a first rotation-stop means 57 is provided between the spacer 41 and the first-speed friction plate 52a and the second-speed friction plate 52b for rotationally fixing the first-speed friction plate 52a and the second-speed friction plate 52b to the spacer 41 while the first-speed friction plate 52a and the second-speed friction plate 52b are in their respective neutral positions.

The first rotation-stop means 57 includes a plurality of circumferentially spaced apart rotation stop grooves 59 formed in an annular projection 58 formed on the radially outer periphery of the spacer 41, and rotation-stop protrusions 60 formed on the bosses 54 of the first-speed friction plate 52a and the second-speed friction plate 52b, respectively, and engageable in the respective rotation-stop grooves 59. When the rotation-stop protrusions 60 of either of the first-speed friction plate 52a and the second-speed friction plate 52b are engage in the rotation-stop grooves 59, this friction plate is rotationally fixed to the spacer 41.

A second rotation-stop means 61 is provided between the spacer 41 and the control ring 51 for rotationally fixing the control ring 51 to the spacer 41 while the control ring 51 is in the neutral position.

The second rotation-stop means 61 includes second rotation-stop grooves 62 formed in the annular projection 58 formed on the spacer 41 and wider than the rotation-stop grooves 59, and second rotation-stop protrusions 63 formed on the radially inner periphery of the control ring 51. When the second rotation-stop protrusions 63 engage in the rotation-stop grooves 62, the control ring 51 is rotationally fixed to the spacer 41.

As shown in Figs. 8 and 11, the second rotation-stop protrusions 63 are bifurcated, and half of the rotation-stop protrusions 60 formed on the first-speed friction plate 52a and the second-speed friction plate 52b, respectively, are engageable in the recesses defined between the bifurcated pieces of the respective second rotation-stop protrusions 63.

Tapered surfaces 64 are formed on the respective sides of the annular projection 58 at its portions bordering the respective wider second rotation-stop grooves 62 The tapered surfaces 64 have a taper angle of several to several tens of degrees. When the control ring 51 is pushed axially toward the neutral position with the second rotation-stop protrusions 63 pressed against the tapered surfaces 64 on one side, the control ring 51 is also turned while sliding along the tapered surfaces 64 until the ring 51 returns to its neutral position.

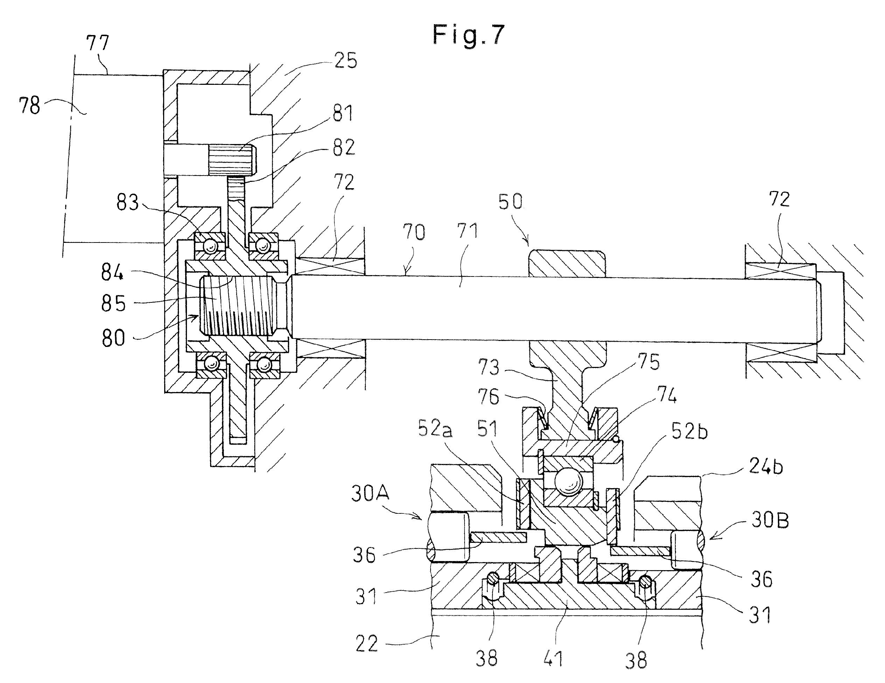

As shown in Fig. 7, the shift mechanism 70 includes a shift rod 71 slidably supported by two slide bearings 72 mounted in the housing 25 so as to extend parallel to the output shaft 22, a shift fork 73 mounted on the shift rod 71, and a sleeve 75 rotatably but axially immovably supported on a rolling bearing 74 mounted on the radially outer periphery of the control ring 51. The shift fork 73 has bifurcated pieces at its free end which are received in an annular groove 76 formed in the radially outer periphery of the sleeve 75. Thus, by moving the shift rod 71 in either axial direction by means of an actuator 77, the sleeve 75 and thus the control ring 51 can be moved in the same axial direction.

The actuator 77 may be a cylinder or a solenoid connected to the shift rod 71. But the actuator 77 shown includes a motor 78 and a motion converter mechanism 80 for converting the rotation of the output shaft 79 of the motor 78 to axial movement of the shift rod 71.

In particular, the motion converter mechanism includes a driving gear 81 formed on the output shaft 79 of the motor 78, and a driven gear 82 in the form of a nut member meshing with the driving gear 81 and rotatably supported by two opposed bearings 83. The driven gear 82 is formed with an internal thread 84 on its radially inner periphery which is in threaded engagement with an external thread formed on the outer periphery of the shift rod 71 at its end portion. Thus, when the motor 78 is rotated, the driven gear 82 rotates without axially moving, thus axially moving the shift rod 71.

As shown in Fig. 2, an output gear 86 is formed on the output shaft 22 at one end thereof through which the rotation of the output shaft 22 is transmitted to the differential 90.

The differential 90 includes a differential case 92 rotatably supported by the housing 25, a ring gear 91 mounted to the differential case 92 and meshing with the output gear 86, two pinions 94 mounted on a pinion shaft 93 having both ends thereof rotatably supported by the differential case 92, and two side gears 95 each meshing with both pinions 94. Two axles 96 are connected at their ends to the respective side gears 95.

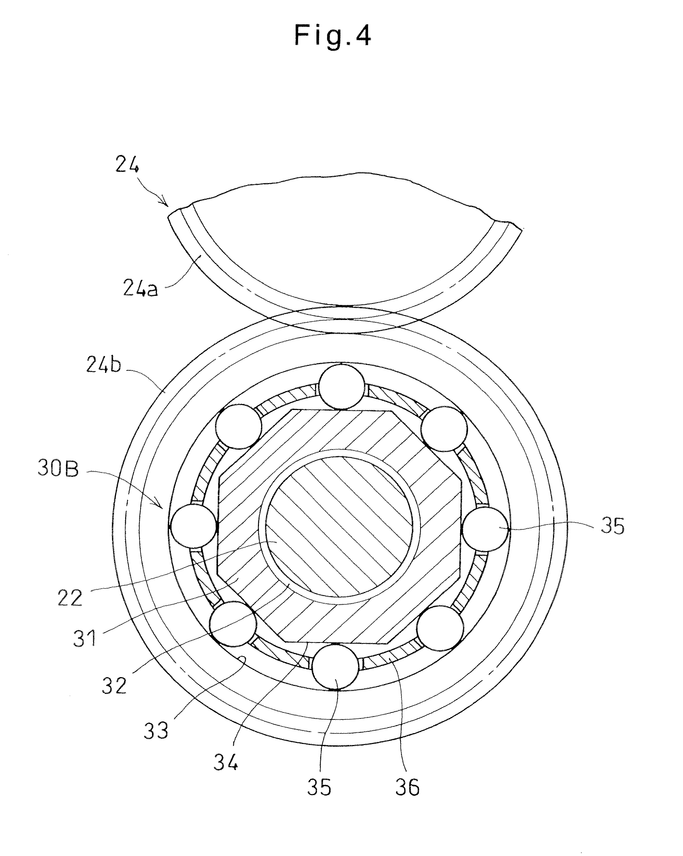

Now the operation of the motor drive assembly A for vehicle of the above embodiment is described. Fig. 3 shows the state in which the friction plates 52a and 52b are both separated from and out of engagement with the first output gear 23b and the second output gear 24b, respectively (neutral position). In this state, the first two-way clutch 30A, which is mounted inside of the first output gear 23b, and the second two-way clutch 30B. which is mounted inside of the second output gear 24b, are both disengaged as shown in Fig. 4.

Thus, when, in this state, the electric motor 10, shown in Fig. 2, is actuated and the input shaft 21 rotates, its rotation is transmitted to the first output gear 23b through the first input gear 23a (because they mesh with each other), and is also transmitted to the second output gear 24b through the second input gear 24a (because they mesh with each other). But the rotation of the input shaft 21 is not transmitted to the output shaft 22 with the first output gear 23b and the second output gear 24b idling.

With the first output gear 23b and the second output gear 24b idling, while the two-way clutches 30A and 30B are in the neutral positions, drag torque acts on the rollers 35 due to contact with the respective cylindrical surfaces 33, which tends to rotate the retainers 36.

But in this state, as shown in Fig. 8(B), since the friction plates 52a and 52b, which are rotationally fixed to the respective retainers 36, are both rotationally fixed to the spacer 41, which is integral with the inner rings 31, due to the engagement of the rotation stop grooves 59 and the rotation stop protrusions 60, drag torque that acts on the rollers 35 can never rotate the retainers 36 relative to the inner rings 31, and thus can never cause malfunction of either of the first and second two-way clutches 30A and 30B.

While the electric motor 10 is running with the first output gear 23 and the second output gear 24b both idling, when the motor 78 of Fig. 7 is actuated to move the shift rod 71 leftwardly in Fig. 7, the sleeve 75 and the control ring 51 are also moved leftwardly by the shift fork 73. The control ring 51 thus presses the first-speed friction plate 52a against the side of the first output gear 23.

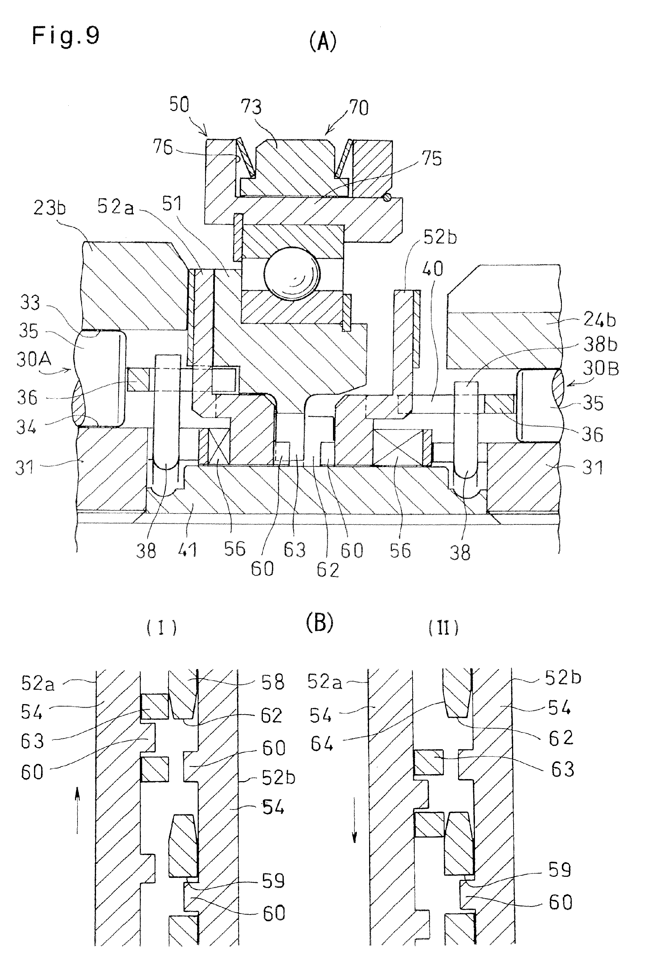

Fig. 9 shows the state in which the first-speed friction plate 52a has been pressed against the side of the first output gear 23b. When the first-speed friction plate 52a moves axially in this manner, the rotation-stop protrusions 60 of the first-speed friction plate 52a and the rotation-stop protrusions 63 of the control ring 51 disengage from the respective rotation-stop grooves 59 and 62, while the first-speed friction plate 52a is brought into frictional engagement with the side of the first output gear 23b. The retainer 36 is thus coupled to the first output gear 23b.

As a result, the retainer 36 of the first two-way clutch 30A rotates relative to the inner ring 31, causing the rollers 35 to engage the cylindrical surface 33 and the cam surfaces 34. Thus, the rotation of the first output gear 23b is now instantly transmitted to the output shaft 22 through the first two-way clutch 30A. The rotation of the output shaft 22 is then transmitted to the axles 96 through the differential 90.

As a result, in the case of the electric vehicle EV shown in Fig. 1(A), its front wheels 1 are driven and the electric vehicle EV starts. In the case of the hybrid vehicle HV shown in Fig. 1(B), the rear wheels 2 as auxiliary drive wheels are driven, assisting in the drive of the front wheels 1.

With the first-speed friction plate 52a of the first two-way clutch 30A in frictional engagement with the first output gear 23b, which is formed with the cylindrical surface 33, when the fist two-way clutch 30A engages due to applied torque or hard acceleration of the vehicle, as shown in Fig. 9(B)-(I), the second rotation-stop protrusions 63 axially face the respective tapered surfaces 64 formed on the annular projection 58 as shown in Fig. 9(B)-1. When torque disappears or the vehicle begins hard deceleration, the second rotation-stop protrusions 63 axially face the tapered surfaces 64 as shown in Fig. 9(B)-(II).

During such hard acceleration or hard deceleration, the rollers 35 of the second two-way clutch 30B tend to be wedged into the respective wedge-shaped spaces due to inertia. But since the second-speed friction plate 52b is rotationally fixed to the spacer 41, which is integral with the inner rings 31 because the rotation-stop protrusions 60 are engaged in the rotation-stop grooves 59, the inner ring 31 of the second two-way clutch 30B cannot rotate relative to its retainer 36. Thus the second two-way clutch 30B never engages.

If, due to a trouble of the control program or any other trouble, the shift fork 73, sleeve 75 and control ring 51 should begin to move from the neutral position toward the second two-way clutch 30B while the first two-way clutch 30A is in engagement, the second rotation-stop protrusions 63 would abut the annular projection 58, preventing further movement of these members toward the second two-way clutch 30B, thus preventing untimely engagement of the second two-way clutch 30B.

Since the second two-way clutch 30B is reliably kept in its neutral position while the first two-way clutch 30A is in engagement, the two two-way clutches 30A and 30B never engage simultaneously. This prevents power circulation.

While the first two-way clutch 30A is in engagement, the control ring 51 is rotated relative to other members to the engaged position, where the second rotation-stop protrusions 63 are not in contact with the tapered surfaces 64.

When the inner ring 31 of the first two-way clutch 30A rotates relative to its retainer 36, the switch spring 38 is elastically deformed. Thus, when the motor 78 is rotated in the direction opposite to the above-mentioned direction and the shift rod 71 is moved in the direction opposite to the above-mentioned direction (i.e. rightwardly in Fig. 7), thereby moving the control ring 51 away form the first output gear 23b, the first-speed friction plate 52a separates from the first output gear 23b under the elastic restoring force of the elastic member 55. Simultaneously, the retainer 36 rotates back to its original position under the elastic restoring force of the switch spring 38, moving the rollers 35 back to their neutral positions. This instantly shuts off transmission of rotation from the input shaft 21 to the output shaft 22.

But if the control ring 51 fails to return to its ideal neutral position for some reason, the tapered surfaces 64 are pushed by the second rotation-stop protrusions 63. This applies a circumferential component force to the control ring 51, moving the control ring 51 back to its ideal neutral position.

When the shift rod 71 is moved in the above direction (i.e. rightwardly in Fig. 7), the sleeve 75 and the control ring 51 are moved in the same direction as the shift rod 71 by the shift fork 73, and second-speed friction plate 52b is pressed against the side of the second output gear 24b by the control ring 51.

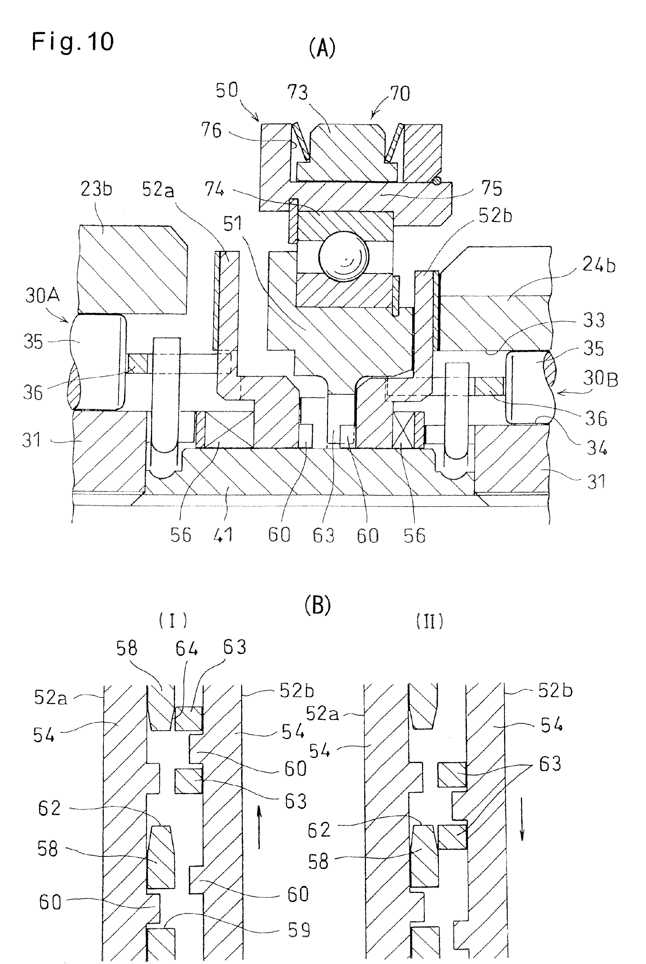

Fig. 10 shows the state in which the second-speed friction plate 52a has been pressed against the side of the second output gear 24b. When the second-speed friction plate 52b is moved axially to this position, the rotation-stop protrusions 60 of the second-speed friction plate 52b and the rotation-stop protrusions 63 disengage from the rotation stop grooves 59 and 62, respectively. Also, due to the frictional engagement of the second-friction plate 52b with the side of the second output gear 24b, the retainer 36 of the second two-way clutch is coupled to the second output gear 24b.

Thus, the retainer 36 of the second two-way clutch 30B rotates relative to its inner ring 31, causing its rollers 35 to engage the cylindrical surface 33 and the cam surfaces 34. The rotation of the second output gear 24b is thus instantly transmitted to the output shaft 22 through the second two-way clutch 30B. The rotation of the output shaft 22 is in turn transmitted to the axles 96 through the differential 90.

In the above manner, it is possible to change gears while the electric vehicle EV shown in Fig. 1(A) or the hybrid vehicle HV shown in Fig. 1(B) is traveling.

With the second two-way clutch 30B in engagement, when the vehicle accelerates hard or torque is applied, the second rotation-stop protrusions 63 axially face the tapered surfaces 64 of the annular projection 58 as shown in Fig. 10(B)-1. When the vehicle begins hard deceleration or torque is removed, the second rotation-stop protrusions 63 axially face the tapered surfaces 64 of the second rotation-stop protrusions 63 as shown in Fig. 10(B)-II.

During such hard acceleration or hard deceleration, the rollers 35 of the first two-way clutch 30A tend to be wedged into the respective wedge-shaped spaces due to inertia. But since the first-speed friction plate 52a is rotationally fixed to the spacer 41, which is integral with the inner rings 31 because the rotation-stop protrusions 60 are engaged in the rotation-stop grooves 59, the inner ring 31 of the first two-way clutch 30A cannot rotate relative to its retainer 36. Thus the first two-way clutch 30A never engages.

If, due to a trouble of the control program or any other trouble, the shift fork 73, sleeve 75 and control ring 51 should begin to move from the neutral position toward the first two-way clutch 30A while the second two-clutch 30B is in engagement, the second rotation-stop protrusions 63 would abut the annular projection 58, preventing further movement of these members toward the first two-way clutch 30A, thus preventing untimely engagement of the first two-way clutch 30A.

Since the first two-way clutch 30A is reliably kept in its neutral position while the second two-way clutch 30B is in engagement, the two two-way clutches 30A and 30B never engage simultaneously. This prevents power circulation.

While the second two-way clutch 30B is in engagement, the control ring 51 is rotated relative to other members to the engaged position, where the second rotation-stop protrusions 63 are not in contact with the tapered surfaces 64.

When gears are changed from the second speed to the first speed by actuating the shift mechanism 70 of the gear ratio switch-over device 50, if the control ring 51 fails to return to its ideal neutral position for some reason, the tapered surfaces 64 are pushed by the second rotation-stop protrusions 63 of the control ring 51. This applies a circumferential component force to the control ring 51, moving the control ring 51 back to its ideal neutral position.

Thus, by moving the shift rod 71 in either axial direction by driving the motor 78 as an actuator, it is possible to instantly engage and disengage either of the first two-way clutch 30A and the second two-way clutch 30B. Gears can thus be changed quickly.

As shown in the embodiment, by mounting the control ring 51 and the two friction plates 52a and 52b between the first output gear 23b and the second output gear 24b with the friction plate 52a rotationally fixed to the retainer 36 of the first two-way clutch 30A and the friction plate 52b rotationally fixed to the retainer 36 of the second two-way clutch 30B so that the control ring 51 can be shifted either rightwardly or leftwardly by the shift mechanism 70, it is possible to selectively engage and disengage the two two-way clutches 30A and 30B with the single gear ratio switch-over mechanism 50, and thus to minimize the size of the entire motor drive assembly.

In the embodiment, the cylindrical surfaces 33 are formed on the inner peripheries of the first output gear 23b and the second output gear 24b, while the cam surfaces 34 are formed on the outer peripheries of the inner rings 31, which are mounted inside the respective first and second output gears 23b and 24b. But conversely, cam surfaces may be formed on the inner peripheries of the first output gear 23b and the second output gear 24b, and cylindrical surfaces may be formed on the outer peripheries of the inner rings. In the latter case, the switch springs are mounted between the first output gear 23b and the second output gear 24b and the respective retainers 36 to elastically keep the rollers in their neutral positions.

In the embodiment, the spacer 41, which is formed with the annular projection 58, is rotationally fixed to the inner rings 31. But instead, the spacer 41, having the annular projection 58, may be directly rotationally fixed to the output shaft 22, or the annular projection 58 may be formed not on the spacer but directly on the outer periphery of the output shaft 22.

### DESCRIPTION OF THE NUMERALS

- 1.: Front wheel
- 2.: Rear wheel
- 10.: Electric motor
- 20.: Transmission
- 21.: Input shaft (Support shaft)
- 22.: Output shaft (Support shaft)
- 23.: First reducing gear train
- 24.: Second reducing gear train
- 30A.: First two-way clutch
- 30B.: Second two-way clutch
- 31.: Inner ring
- 33.: Cylindrical surface
- 34.: Cam surface
- 35.: Roller
- 36.: Retainer
- 38.: Switch spring
- 50.: Gear ratio switch-over mechanism
- 51.: Control ring
- 52a.: First-speed friction plate (Friction plate)
- 52b.: Second-speed friction plate (Friction plate)
- 57.: First rotation-stop means
- 58.: Annular projection
- 59.: Rotation-stop groove
- 60.: Rotation-stop protrusion
- 61.: Second rotation-stop means
- 62.: Second rotation-stop groove
- 63.: Second rotation-stop protrusion
- 70.: Shift mechanism
- 71.: Shift rod
- 73.: Shift fork
- 74.: Rolling bearing
- 75.: Sleeve
- 77.: Actuator
- 78.: Motor
- 80.: Motion converter mechanism
- 82.: Driven gear (Nut member)
- 84.: Internal thread
- 85.: External thread
- 90.: Differential

## Claims

1. A motor drive assembly for vehicles comprising an electric motor, a normally meshing transmission including first and second parallel support shafts and a plurality of gear trains providing different gear ratios by selectively transmitting the rotation of the electric motor through any selected one of the gear trains, a differential for distributing the power from the transmission to right and left wheels, wherein each of the gear trains comprises first and second gears meshing with each other, the first gears being rotatably supported by the first support shaft, two-way clutches which are equal in number to the number of the gear trains and disposed between the first gears of the respective gear trains and the first support shaft, and a gear ratio switch-over mechanism for selectively engaging one of an axially opposed adjacent pair of the two-way clutches, wherein the two-way clutches are mechanical type two-way clutches each comprising engaging elements and a retainer retaining the engaging elements, and configured to selectively lock the first gear to the first support shaft by controlling the rotation of the retainer, the gear ratio switch-over mechanism comprising an axially opposed first and second friction plates rotationally fixed to the retainers of the axially opposed pair of the two-way clutches, respectively, a control ring mounted between the first and second friction plates and movable axially toward the first and second friction plates, respectively, and configured to push and move the first and second friction plates when the control ring is moved toward the first and second friction plates, respectively, thereby controlling the rotation of the retainers corresponding to the respective first and second friction plates, and a shift mechanism for axially moving the control ring, wherein the first support shaft is formed with an annular projection on an outer periphery of the first support shaft, and wherein the gear ratio switch-over mechanism further includes a first rotation-stop means for rotationally fixing the respective first and second friction plates to the annular projection when the respective first and second friction plates are in their neutral positions, and a second rotation-stop means for rotationally fixing the control ring to the annular projection when the control ring is in its neutral position, and for preventing axial movement of the control ring when the control ring rotates about the first support shaft while the control ring is not rotationally fixed to the annular projection.

2. The motor drive assembly of claim 1, wherein the two-way clutches each further comprise an inner ring mounted between the first gear and the first support shaft and rotationally fixed to the first support shaft, wherein a cylindrical surface is formed on one of an outer periphery of the inner ring and an inner periphery of the first gear, and cam surfaces are formed on the other to define wedge-shaped spaces between the respective cam surfaces and the cylindrical surfaces, each of the wedge-shaped spaces narrowing toward respective circumferential ends thereof, and wherein the engaging elements are rollers received between the respective cam surfaces and the cylindrical surface, and retained in position by the retainer, the retainer being mounted between the first gear and the inner ring, and a switch spring mounted between one of the first gear and the inner ring that is formed with the cam surfaces and the retainer and elastically retaining the retainer in a neutral position where the rollers are out of engagement with the cylindrical surface and the cam surfaces.

3. The motor drive assembly of claim 1 or 2, wherein the first rotation-stop means comprises rotation-stop grooves formed in the annular projection, and rotation-stop protrusions formed on the first and second friction plates, respectively, and configured to be engaged in the rotation-stop grooves, wherein when the rotation-stop protrusions are engaged in first rotation-stop groove, the control ring is rotationally fixed in position in its neutral position, and wherein when rotation-stop protrusions of the control ring disengages from some of the rotation-stop grooves and rotate, the rotation-stop protrusions of the control ring face one of the two sides of the annular projection at both ends of said some of the rotation-stop grooves, thereby preventing axial movement of the control ring, whereby said axially opposed pair of the two-way clutches are prevented from engaging simultaneously.

4. The motor drive assembly of any of claims 1 to 3, wherein the second rotation-stop means comprises second rotation-stop grooves formed in the annular projection, and second rotation-stop protrusions formed on an inner periphery of the control ring and configured to be engaged in the second rotation-stop grooves.

5. The motor drive assembly of any of claims 1 to 4, wherein the shift mechanism comprises a sleeve rotatably supported by an outer periphery of the control ring, a shift rod extending parallel to the first and second support shafts and movable in an axial direction of the shift rod, an actuator for moving the shift rod in the axial direction, and a shift fork supported by the shift rod for moving the control ring together with the sleeve to the position corresponding to the axial movement of the shift rod when the shift rod is moved axially.

6. The motor drive assembly of claim 5, wherein the shift mechanism further comprises a rolling bearing mounted between the control ring and the sleeve, wherein the control ring is configured to be axially moved through the rolling bearing when selectively engaging and disengaging either one of the axially opposed pair of the two-way clutches.

7. The motor drive assembly of claim 5 or 6, wherein the actuator comprises a motor, and the motor drive assembly further comprises a motion converter mechanism for converting the rotation of the motor as the actuator to axial movement of the shift rod.

8. The motor drive assembly of claim 7, wherein the motion converter mechanism comprises a nut member supported by the shift rod so as to be rotatable about the shift rod, and rotated by the motor as the actuator, wherein the nut member is formed with an internal thread on its inner periphery, and the shift rod is formed with an external thread on its outer periphery which is in threaded engagement with the internal thread of the nut member.

9. The motor drive assembly of claim 7, wherein the actuator comprises a cylinder connected to the shift rod.

10. The motor drive assembly of claim 7, wherein the actuator comprises a solenoid connected to the shift rod.

11. An electric vehicle comprising a pair of right and left front wheels provided at a front portion of the vehicle, a pair of right and left rear wheels provided at a rear portion of the vehicle, and the motor drive assembly of any of claims 1 to 10, wherein the motor drive assembly is configured to drive at least either the front wheels or the rear wheels.

12. A hybrid vehicle comprising a pair of right and left front wheels provided at a front portion of the vehicle, a pair of right and left rear wheels provided at a rear portion of the vehicle, the motor drive assembly of any of claims 1 to 10, and an engine, wherein the motor drive assembly is configured to drive either the front wheels or the rear wheels, and the engine is configured to drive the other wheel.
